# EUROPÄISCHE PATENTANMELDUNG

(11) **EP 1 685 937 A2**
(43) Veröffentlichungstag der Anmeldung: **02.08.2006**
(21) Anmeldenummer: 06000808.3
(22) Anmeldetag: 16.01.2006
(51) Int. Cl.: B29C 44/38, B29C 44/18

(54) **Verfahren zur Herstellung eines mit einem Schaumstoff ausgeschäumten Hohlkammerprofils**

(30) Priorität: 26.01.2005 AT 1172005
(71) Anmelder: IFN-Holding AG, 4050 Traun (AT)
(72) Erfinder: Mattischek, Johann, Peter, Dipl.-Ing. Dr., 4050 Traun (AT)
(74) Vertreter: Secklehner, Günter

(57) **Zusammenfassung**

Die Erfindung beschreibt ein Verfahren zur Herstellung eines mit einem Schaumstoff ausgeschäumten Hohlkammerprofils (2), bei dem auf eine Trägermaterialeinlage (5) ein flüssiges Reaktionsgemisch (3) zur Bildung des Schaumstoffes aufgetragen wird und die Trägermaterialeinlage (5) danach in das Hohlkammerprofil (2) eingezogen wird. Dem Reaktionsgemisch (3) wird vor dem Auftragen auf die Trägermaterialeinlage (5) zumindest ein Hilfsstoff zugesetzt, der ein Zerfließen des aufgetragenen Reaktionsgemisches (3) quer zu einer Bewegungsrichtung (Pfeil (20)) der Trägermaterialeinlage (5) zumindest nach dessen Auftrag auf die Trägermaterialeinlage (5) und vor dem Einziehen derselben in das Hohlkammerprofil (2) verhindert bzw. verzögert.

## Beschreibung

Die Erfindung betrifft ein Verfahren zur Herstellung eines mit einem Schaumstoff ausgeschäumten Hohlkammerprofils, bei dem auf eine Trägermaterialeinlage ein flüssiges Reaktionsgemisch zur Bildung des Schaumstoffes aufgetragen wird und die Trägermaterialeinlage danach in das Hohlkammerprofil eingezogen wird, sowie ein Hohlkammerprofil mit einer Ausschäumung zumindest einzelner Hohlkammern hergestellt aus einem Reaktionsgemisch sowie mit einer, in der bzw. den Hohlkammer(n) angeordneten Trägermaterialeinlage.

Zur Herstellung von Fensterprofilen aus PVC ist es heute üblich, so genannte Hohlkammerprofile zu verwenden. Um dabei eine Verbesserung der Wärmedämmung zu erreichen, sind einzelne der Hohlkammern mit einem Schaumstoff ausgeschäumt. Für das Ausschäumverfahren werden dabei üblicherweise Trägermaterialeinlagen verwendet, auf denen ein Reaktionsgemisch zum Einbringen in das Hohlkammerprofil aufgetragen werden.

Ein derartiges Verfahren beschreibt z.B. die DE 100 31 568 A1. Gemäß dieser DE-A1 lassen sich Hohlkammerprofile mit einer Polyurethan-Ausschäumung besonders vorteilhaft herstellen, indem ein flüssiges Reaktionsgemisch auf eine Trägermaterialeinlage aufgetragen wird, während die Trägermaterialeinlage samt Reaktionsgemisch in das Hohlkammerprofil mit gleichmäßiger Geschwindigkeit eingezogen wird, wobei eine Trägermaterialeinlage verwendet wird, welche für das Reaktionsgemisch eine verzögerte Durchlässigkeit aufweist, wobei das Verzögerungsintervall zum Zeitpunkt der Aufgabe des Reaktionsgemisches bis zum Einbringen in das Hohlkammerprofil dauert und wobei danach die Trägermaterialeinlage für das Reaktionsgemisch durchlässig wird und der sich bildende Schaumstoff überall über den Profilquerschnitt eine gute Haftung mit der Innenwandung des Hohlkammerprofils eingeht. Als Trägermaterialeinlage wird beispielsweise ein Faservlies, ein Textilgewebe, wie z.B. Leinen oder Baumwolle oder ein Papier mit entsprechend verzögerter Durchlässigkeit verwendet. Das Reaktionsgemisch selbst weist vor bzw. bis zum Einbringen in die Hohlkammer eine Viskosität von 100 bis 800 mPas auf.

Nachteilig an diesem Verfahren ist allerdings, dass insbesondere bei kleineren Querschnitten des Hohlkammerprofils eine Trägermaterialeinlage verwendet werden muss, welche in den Seitenbereichen hochgezogen ist, d.h. im wesentlichen eine Trägermaterialeinlage verwendet werden muss, die an den Querschnitt des Hohlkammerprofils angepasst ist, um damit ein seitliches Abfließen des flüssigen Reaktionsgemisches beim Einbringen in das Hohlkammerprofil zu vermeiden.

Es ist daher die Aufgabe der vorliegenden Erfindung, das eingangs genannte Verfahren derart zu verbessern, dass dieses unabhängig von einer speziell geformten Trägermaterialeinlage für jegliche Hohlkammerprofilquerschnitte verwendet werden kann.

Diese Aufgabe der Erfindung wird jeweils eigenständig durch das eingangs genannte Verfahren, bei dem dem Reaktionsgemisch vor dem Auftragen auf die Trägermaterialeinlage zumindest ein Hilfsstoff zugesetzt wird, der ein Zerfließen des aufgetragenen Reaktionsgemisches quer zu einer Bewegungsrichtung der Trägermaterialeinlage zumindest nach dessen Auftrag auf die Trägermaterialeinalge und vor dem Einziehen derselben in das Hohlkammerprofil verhindert bzw. verzögert sowie durch ein entsprechend mit diesem Verfahren hergestelltes Hohlkammerprofil gelöst.

Von Vorteil ist dabei, dass keine seitliche "Führung" für das Reaktionsgemisch notwendig ist, sodass zumindest annähernd unabhängig vom jeweiligen Querschnitt des auszuschäumenden Hohlkammerprofils eine ebenflächige Trägermaterialeinlage, welche nicht besonders an dem Hohlkammprofilquerschnitt angepasst sein muss, verwendet werden kann. Somit ist es möglich universell ausgebildete Trägermaterialeinlagen zu verwenden, wodurch nicht nur deren Lagerhaltung vereinfacht werden kann, sondern insbesondere damit auch die Produktionszeit, beginnend vom Eingang des Auftrages bis zum fertigen Hohlkammerprofil, verkürzt werden kann. Es wird damit auch eine höhere Flexibilität des Verfahrens erreicht, da für den Fall, dass die Trägermaterialeinlage in Bezug auf den Hohlkammerquerschnitt zu breit ist, diese Trägermaterialeinlage durch einfaches Zuschneiden in Längsrichtung, beispielsweise halbieren, angepasst werden kann, wobei, wie bereits erwähnt, eine exakte Anpassung nicht mehr erforderlich ist, da die Trägermaterialeinlage nur mehr als Transportmittel für das Reaktionsgemisch dient und nicht verhindern muss, dass dieses während des Transportes in das Hohlkammerprofil seitlich abläuft. Zudem kann damit der Vorteil erreicht werden, dass die Trägermaterialeinlage in Querrichtung betrachtet schmäler als der innere Querschnitt des Hohlkammerprofils ausgeführt sein kann, sodass nach dem Aufschäumen des Reaktionsgemisches im Hohlkammerprofil diese Trägermaterialeinlage nicht, wie aus dem Stand der Technik bekannt, für das Reaktionsgemisch durchlässig ausgebildet sein muss, sondern, eine allseitige Haftung des Schaumstoffes an der Profiloberfläche des Hohlkammerprofils allein durch das Aufschäumen und seitliche Treiben des Reaktionsgemisches gewährleistet werden kann, sodass die minimale Fläche, die gegebenenfalls zwischen einer Oberfläche des Hohlkammerprofils und der Trägermaterialeinlage, welche unter Umständen nicht mit Schaumstoff ausgefüllt ist, für die Haftfähigkeit, d.h. die Haftung des Schaums innerhalb des Hohlkammerprofils keine Rolle spielt.

Weitere vorteilhafte Ausgestaltungen des erfindungsgemäßen Verfahrens sowie des Hohlkammerprofils sind in den Ansprüchen 2 bis 10 bzw. 12 bis 18 gekennzeichnet und können deren Vorteile der folgenden Beschreibung entnommen werden.

Zum besseren Verständnis wird die Erfindung anhand der nachfolgenden Figuren näher erläutert.

Es zeigen jeweils in stark schematisch vereinfachter Darstellung:
- Fig. 1: eine Vorrichtung zur Herstellung des erfindungsgemäßen Hohlkammerprofils;
- Fig. 2: ein Hohlkammerprofil im Querschnitt betrachtet.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

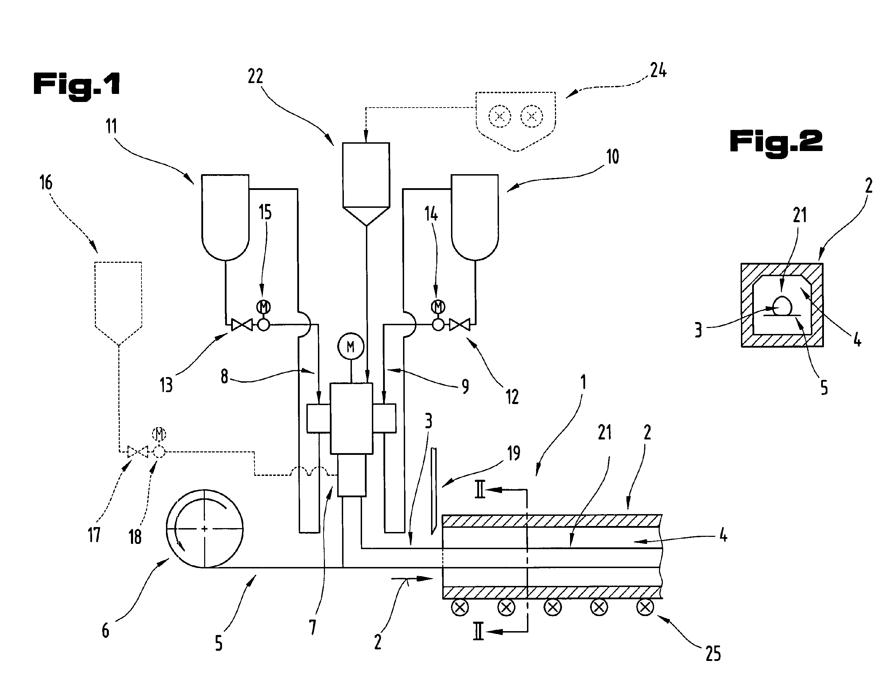

Fig. 1 zeigt eine Vorrichtung 1 zum Ausschäumen eines Hohlkammerprofils 2, insbesondere zum Eintrag eines Reaktionsgemisches 3 in einen Hohlraum 4 des Hohlkammerprofils 2.

Fig. 2 zeigt hierzu das Hohlkammerprofil 2 im Querschnitt mit dem in den Hohlraum 4 eingebrachten Reaktionsgemisch 3 vor dem Aufschäumen desselben.

Zur vereinfachten Darstellung wurde das Hohlkammerprofil 2 - im Querschnitt betrachtet - zumindest annähernd quadratisch dargestellt. Es sei jedoch darauf hingewiesen, dass mit dem erfindungsgemäßen Verfahren Hohlkammerprofile 2 an sich ausgeschäumt werden können, d.h. dass die Erfindung nicht auf bestimmte Querschnitte beschränkt ist. Dies trifft insbesondere auch auf den inneren Querschnitt des Hohlraumes 4 des Hohlkammerprofils 2 zu.

Das Hohlkammerprofil 2 kann beispielsweise als Fensterrahmenprofil aus Kunststoff, insbesondere PVC, ausgebildet sein. Im Rahmen der Erfindung ist es aber selbstverständlich möglich, andere Hohlkammerprofile 2, wie z.B. Rohre, etc., mit dem erfindungsgemäßen Verfahren auszuschäumen.

Des weiteren kann im Inneren des Hohlkammerprofiles 2, d.h. im Hohlraum 4, zumindest ein Steg zur Unterteilung des Hohlraumes 4 angeordnet sein, wie dies beispielsweise bei Fensterprofilen üblich ist. Für den Fall, dass dieser Steg durchgehend ist, d.h. also, dass der Hohlraum 4 in zwei Einzelhohlräume unterteilt ist, kann das Reaktionsgemisch 3 in beide Hohlräume eingebracht werden, wobei dies gleichzeitig oder hintereinander erfolgen kann. Von Vorteil ist es jedoch, wenn dieser Steg bzw. diese Stege zumindest bereichsweise unterbrochen sind, sodass das aufschäumende Reaktionsgemisch 3 bei einmaligem Eintrag in den Hohlraum 4 in sämtliche Kammern des Hohlkammerprofiles 2 expandieren kann.

Zum Eintrag des Reaktionsgemisches 3 in den Hohlraum 4 des Hohlkammerprofiles 2 wird dem Stand der Technik entsprechend eine Trägermaterialeinlage 5 verwendet, welche beispielsweise von einer Vorratsrolle 6 abgewickelt werden kann. Zum Abwickeln bzw. zum Einziehen dieser Trägermaterialeinlage 5 in den Hohlraum 4 des Hohlkammerprofiles 2 kann dieses mit entsprechenden Einrichtungen gezogen bzw. ist es weiters möglich, die Trägermaterialeinlage 2 auf einen weiteren, in den Figuren nicht dargestellten Träger aufzulegen, der durch den Hohlraum 4, der - wie aus Fig. 1 ersichtlich ist - in Längsrichtung beidseitig offen ist, mit einer Linearbewegung hindurchbewegt wird und damit die Trägermaterialeinlage mitnimmt.

Zur Unterstützung der Linearbewegung des Trägermaterials 5 kann beispielsweise die Vorratsrolle 6, welche drehend gelagert ist, auch motorbetrieben ausgebildet werden, bzw. ist es möglich, wenn die Eigensteifigkeit der Trägermaterialeinlage 5 eine Schubbewegung erlaubt, die Linearbewegung allein durch diese Motorkraft der Vorratsrolle zu bewerkstelligen.

Zwischen der Vorratsrolle 6 und dem Hohlkammerprofil 2 ist eine Dosiereinrichtung 7 für die Zufuhr, d.h. das Auftragen, des Reaktionsgemisches 3 auf die Trägermaterialeinlage 5 angeordnet. Diese Dosiereinrichtung 7 kann als Mischkopf ausgebildet sein, wenn vorteilhafterweise als Reaktionsgemisch 3 eine Zusammensetzung für einen so genannten Zweikomponentenpolyurethanschaum verwendet wird. Dazu werden der Dosiereinrichtung 7 über Leitungen 8, 9 die entsprechenden Edukte, also beispielsweise zumindest ein Polyol und zumindest ein Isocyanat, zugeführt und in dieser vermischt.

Die Vermischung kann aber selbstverständlich auch an einer anderen Stelle in der Produktionslinie durchgeführt werden, sodass die Dosiereinrichtung 7 beispielsweise als reine Mengendosierung bzw. Volumendosierung zum Auftragen des Reaktionsgemisches 3 auf die Trägermaterialeinlage 5 dient.

Derartige Dosiereinrichtungen bzw. Mischköpfe sind bereits aus dem Stand der Technik bekannt, sodass sich eine weitere Erörterung an dieser Stelle erübrigt und sei der Leser hierzu an die jeweiligen Stellen im Stand der Technik verwiesen.

Das Polyol und/oder das Isocyanat können in Vorratsbehältern 10, 11 zur Versorgung der Leitungen 8, 9 vorrätig gehalten werden, und daraus über Stellmittel 12, 13, z.B. Ventile, sowie vorzugsweise motorbetriebene Fördereinrichtungen 14, 15, z.B. Pumpen, in die Leitungen 8, 9 eingespeist werden.

Des weiteren ist es möglich, wie in Fig. 1 strichliert dargestellt, dass über einen weiteren Vorratsbehälter 16 ein Reaktionsmittel, z.B. Wasser, wiederum über bevorzugt ein Stellmittel 17 sowie eine Fördereinrichtung 18 der Dosiereinrichtung 7 zuzuführen, um das Aufschäumen des Reaktionsgemisches 3 zu bewirken.

Bevorzugt wird ein Zweikomponentensystem verwendet, jedoch ist es selbstverständlich möglich, für das Ausschäumen ein einkomponentiges System einzusetzen.

Da das Hohlkammerprofil 2, gemäß dem Ausführungsbeispiel nach Fig. 1 eine endliche Länge aufweist, ist es von Vorteil, wenn das zugeführte Reaktionsgemisch 3 auf der Trägermaterialeinlage 5 zusammen mit dieser nach deren Einbringung in das Hohlkammerprofil 2 auf die vorbestimmte Länge, insbesondere die Länge des Hohlkammerprofils 2 mit einer Schneidvorrichtung 19, beispielsweise einem Messer, abgelängt wird.

Die Schneidvorrichtung 19 ist bevorzugt zwischen dem Hohlkammerprofil 2 und der Dosiereinrichtung 7 angeordnet.

Erfindungsgemäß ist vorgesehen, dass dem Reaktionsgemisch 3 zumindest ein Hilfsstoff, insbesondere ein rheologisches Additiv, zugesetzt wird, der ein Zerfließen des aufgetragenen Reaktionsgemisches 3 quer zu einer Bewegungsrichtung der Trägermaterialeinlage 5, gemäß Pfeil 20 in Fig. 1, nach dessen Auftrag auf die Trägermaterialeinlage 5 und vor dem Einziehen derselben bzw. während des Einziehens in das Hohlkammerprofil 2 verhindert bzw. verzögert. Es soll damit erreicht werden, dass ein Strang 21, der durch den Auftrag des Reaktionsgemisches 3 auf die Trägermaterialeinlage 5 mit der Dosiereinrichtung 7 entsteht, seitlich über die Trägermaterialeinlage 5 abfließt. Am optimalsten für die Erfindung ist es, wenn dieser Strang 21 aus dem Reaktionsgemisch 3 überhaupt nicht zerfließt, d.h. dieser Strang 21 unveränderlich in seiner Breite bis zum Zeitpunkt des Aufschäumens bleibt. Es ist jedoch ausreichend, wenn sich dieser Strang 21 aus dem Reaktionsgemisch 3 maximal so weit ausbreitet, dass gerade ein seitliches Überlaufen dieses Reaktionsgemisches 3 über die Trägermaterialeinlage 5 verhindert wird. So ist es beispielsweise möglich, dass der Zusatz des Hilfsstoffes zu dem Reaktionsgemisch 3 bewirkt, dass sich die Breite des Stranges 21 auf eine Gesamtbreite vergrößert, die ausgewählt ist aus einem Bereich mit einer unteren Grenze von 20 %, insbesondere 30 %, vorzugsweise 40 %, und einer oberen Grenze von 90 %, insbesondere 80%, vorzugsweise 70 %, der vorgegebenen Breite der Trägermaterialeinlage 5.

Gemäß einer ersten Ausführungsvariante der Erfindung kann dieser Hilfsstoff, der dem Reaktionsgemisch 3 zugesetzt wird, durch ein Schaumstoffgranulat, insbesondere ein Schaumstoffpulver, gebildet sein, wobei dieses Schaumstoffpulver bevorzugt aus dem gleichen Material, aus dem die Ausschäumung des Hohlkammerprofils 2 erzeugt wird, also beispielsweise einem Polyurethanschaum, besteht. Dieser Polyurethanschaum kann z.B. MDI - (Dyphenylmethandiisocyant -) oder TDI - (Toloylendiisocyanat -) basierend sein.

Zur Zusetzung dieses Schaumstoffpulvers kann die Vorrichtung 1 einen Hilfsstoffvorratsbehälter 22 umfassen, der über eine Leitung 23 mit der Dosiereinrichtung 7 verbunden ist, wobei in dieser Leitung 23 wiederum Fördereinrichtungen etc. angeordnet sein können. Es ist aber auch möglich, dass die Förderung des Hilfsstoffes, insbesondere Schaumstoffpulvers, allein durch die Schwerkraft erfolgt.

Des weiteren ist es möglich, dass in der Leitung 23 zwischen dem Hilfsstoffvorratsbehälter 22 und der Dosiereinrichtung 7 eine Wiegeeinrichtung (in Fig. 1 nicht gezeigt) angeordnet ist, mit der die jeweils notwendige zuzusetzende Menge an Hilfsstoff zu dem Reaktionsgemisch 3 ermittelt wird.

Generell ist festzuhalten, dass natürlich sämtliche Stell- und Regelmittel der Vorrichtung 1 mit einer Datenverarbeitungsanlage zur höheren Automatisierung der Vorrichtung 1 verbunden sein können, beispielsweise auch die Wiegeeinrichtung, sodass zumindest annähernd ständig die richtige Menge an Hilfsstoff dem Reaktionsgemisch 3 zugesetzt werden kann.

Das Schaumstoffpulver wird beispielsweise aus Abfallschaumstoffen gewonnen - selbstverständlich ist die Herstellung eines Neuschaumes möglich - wobei diese Abfallschaumstoffe in entsprechenden Mühlen oder Reißwerkzeugen, wie beispielsweise in einer Mülle 24, die in Fig. 1 strichliert dargestellt ist, zerkleinert werden. Es ist dabei von Vorteil, wenn das Schaumstoffpulver auf Korngrößen, ausgewählt aus einem Bereich mit einer unteren Grenze von 30 µm, insbesondere 50 µm, vorzugsweise 70 µm und einer oberen Grenze von 170 µm, insbesondere 150 µm, vorzugsweise 100 µm zerkleinert wird.

Der Anteil des Schaumstoffpulvers an dem Reaktionsgemisch 3 kann ausgewählt sein aus einem Bereich mit einer unteren Grenze von 0,5 Gew.-%, insbesondere 2 Gew.-%, vorzugsweise 5 Gew.-%, und einer oberen Grenze von 35 Gew.-%, insbesondere 30 Gew.-%, vorzugsweise 25 Gew.-%, bezogen auf das Gesamtgewicht des Reaktionsgemisches 3.

Anstelle oder zusätzlich zu diesem Schaumstoffpulver ist es gemäß einer Ausführungsvariante der Erfindung möglich, dem Reaktionsgemisch 3 als Hilfsstoff zumindest ein Verdickungsmittel zuzusetzen. Dieses Verdickungsmittel ist vorzugsweise ausgewählt aus einer Gruppe umfassend Talkum, Kieselsäure, Rizinusderivate, synthetische Verdickungsmittel auf Acrylatbasis bzw. generell natürliche bzw. synthetische Polymere, die die Viskosität des Reaktionsgemisches 3 auf eine gewünschten, vorbestimmbaren Wert erhöhen, wie z.B. wasserquellbare oder wasserlösliche synthetische Polymere, bestehend aus hochmolekularen Polymerisaten von Acrylamid bzw. Methacrylamid oder Copolymerisate aus Acrylsäure und Acrylamid mit Molmassen von größer 1 Million. Auch hochmolekulare Polyethylenglykole oder Polymerisate aus Ethylenglykol und Propylenglykol sowie hochmolekulare Polysaccharide, wie Stärke, Guarkernmehl, Johannisbrotkernmehl oder Derivate von Naturstoffen wie Carboxymethylcellulose, Hydroxyethylcellulose, Hydroxypropylcellulose oder Cellulose-Mischether sind einsetzbar.

Es sei erwähnt, dass nicht sämtliche mögliche verwendbaren Verdickungsmittel an dieser Stelle angeführt werden können, die den gewünschten Effekt, nämlich die Verzögerung bzw. Verhinderung des seitlichen Abfließens des Reaktionsgemisches 3 auf der Trägermaterialeinlage 5 bewirken, jedoch sind diese von der Lehre zum technischen Handeln gegenständlicher Beschreibung mitumfasst.

Bevorzugt wird mit dem Hilfsstoff eine Anfangsviskosität des Reaktionsgemisches 3 von größer 850 mPas eingestellt, wobei die Anfangsviskosität des Reaktionsgemisches 3 ausgewählt sein kann, aus einem Bereich mit einer unteren Grenze von 900 mPas, insbesondere 950 mPas, vorzugsweise 1000 mPas und einer oberen Grenze von 1200 mPas, insbesondere 1150 mPas, vorzugsweise 1100 mPas.

Durch die Zugabe des Verdickungsmittels ist es beispielsweise möglich, das Reaktionsgemisch 3 gelartig zu konditionieren.

Alternativ oder zusätzlich zur Verdickung des Reaktionsgemisches 3 ist es möglich, über den Hilfsstoff, beispielsweise das Schaumstoffpulver, eine Thixotropierung des Reaktionsgemisches 3 durchzuführen, sodass dieses Reaktionsgemisch 3 ein Verhalten zeigt, bei dem es nur unter dem Eindruck äußerer Kräfte fließfähig ist, beispielsweise in Form von Scherkräften in der Dosiereinrichtung 7, sodass das Reaktionsgemisch aus derselben ausfließen kann und sich bei Wegfall dieser Mindestkraft zäh oder fest verhält, sodass ein seitliches Zerfließen bzw. Überfließen über die Trägermaterialeinlage 5 verhindert werden kann.

Zusätzlich oder alternativ zu den vorherig beschriebenen Ausführungsvarianten der Erfindung ist es möglich, mit dem Hilfsstoff eine oberflächliche Verhautung des Reaktionsgemisches 3 nach dessen Auftragen auf die Trägermaterialeinlage 5 zu bewirken. So ist es beispielsweise möglich, dass das Reaktionsgemisch 3 z.B. mit Luftfeuchtigkeit und/oder beispielsweise der Dosiereinrichtung 7 zugeführten Wasser im Falle von Polyrethanschäumen diese Verhautung zu bewirken, sodass im Prinzip der weiche Kern des Stranges 21 durch die mehr oder wenige harte Außenhülle zusammengehalten wird und damit das seitliche Zerfließen verhindert bzw. verzögert wird. Bei diesem Ausführungsbeispiel ist jedoch darauf zu achten, dass diese Verhautung nicht derart durchgeführt wird, dass die Schale das freie Aufschäumen des Reaktionsgemisches 3 zum Ausschäumen des Hohlkammerprofils 2 verhindert. Es muss also durch den Schäumdruck diese Haut ab- bzw. aufgerissen bzw. aufgedehnt werden.

Um bei dieser Ausführungsvariante das Aufschäumen des Reaktionsgemisches 3 im Hohlraum des Hohlkammerprofils 2 zu bewirken ist es möglich, als Hilfsstoff dem Reaktionsgemisch 3 zusätzlich zumindest einen Reaktionsverzögerer zur Verzögerung der Schaumbildung zuzusetzen, sodass das Aufschäumen nicht bereits außerhalb des Hohlkammerprofils 2 erfolgt und/oder als Hilfsstoff zusätzlich zumindest einen Reaktionsstarter zuzusetzen, der das Aufschäumen in Gang setzt. Von Vorteil ist dabei, wenn der Reaktionsstarter gleichzeitig eine Verzögerung der Schaumbildung bewirkt, beispielsweise im Bereich von 10 bis 30 sec, sodass die Trägermaterialeinlage 5 mit dem Reaktionsgemisch 3 im noch nicht aufgeschäumten Zustand in das Hohlkammerprofil 2 verbracht werden kann.

Als Reaktionsverzögerer bzw. Reaktionsstarter können sämtliche für diesen Zweck aus dem Stand der Technik bekannten Stoffe eingesetzt werden.

Derartige Reaktionsstarter bzw. ―verzögerer können selbstverständlich auch bei sämtlichen anderen Ausführungsvarianten der Erfindung eingesetzt werden.

Im Falle von Polyurethanschaum ist es zudem möglich, durch die Auswahl von entsprechenden Polyolen bzw. Isocyanaten eine entsprechende Anfangsviskosität einzustellen, z.B. durch die Anzahl der Vernetzungsstellen und/oder die Größe der funktionellen und nichtfunktionellen Gruppen.

Die erfindungsgemäße Vorrichtung 1 kann Teil einer Produktionslinie für fertige Hohlkammerprofile 2, beispielsweise Fensterprofile, sein. Dazu kann das Hohlkammerprofil 2, wie in Fig. 1 gezeigt, beispielsweise aus Rollen 25 verfahrbar gelagert sein, sodass die jeweils abgelängten Hohlkammerprofile 2 automatisch der erfindungsgemäßen Vorrichtung 1 zugeführt werden können.

Das Ausführungsbeispiel zeigt eine mögliche Ausführungsvariante der erfindungsgemäßen Vorrichtung 1 sowie des Hohlkammerprofiles 2, wobei an dieser Stelle bemerkt sei, dass die Erfindung nicht auf die speziell dargestellte Ausführungsvariante derselben eingeschränkt ist, sondern vielmehr auch Variationsmöglichkeiten aufgrund der Lehre zum technischen Handeln durch gegenständliche Erfindung im Können des auf diesem technischen Gebiet tätigen Fachmannes mitumfasst sind.

Der Ordnung halber sei abschließend darauf hingewiesen, dass zum besseren Verständnis des Aufbaus der Vorrichtung 1 und des Hohlkammerprofils 2 diese bzw. deren Bestandteile teilweise unmaßstäblich und/oder vergrößert und/oder verkleinert dargestellt wurden.

Die Thixotropierung des Reaktionsgemisches 3 kann auch physikalisch, z.B. durch den Zusatz von sog. Leichtfüllstoffen, oder chemisch, z.B. mit Aminen, durchgeführt werden, wobei mit Hilfe der Amine durch deren Reaktion mit den Isocyanatgruppen alternativ oder zusätzlich dazu auch die oberflächliche Verhautung durchgeführt werden kann.

Die den eigenständigen erfinderischen Lösungen zugrunde liegende Aufgabe kann der Beschreibung entnommen werden.

### Bezugszeichenaufstellung

- 1: Vorrichtung
- 2: Hohlkammerprofil
- 3: Reaktionsgemisch
- 4: Hohlraum
- 5: Trägermaterialeinlage

- 6: Vorratsrolle
- 7: Dosiereinrichtung
- 8: Leitung
- 9: Leitung
- 10: Vorratsbehälter

- 11: Vorratsbehälter
- 12: Stellmittel
- 13: Stellmittel
- 14: Fördereinrichtung
- 15: Fördereinrichtung

- 16: Vorratsbehälter
- 17: Stellmittel
- 18: Fördereinrichtung
- 19: Schneidvorrichtung
- 20: Pfeil

- 21: Strang
- 22: Hilfsstoffvorratsbehälter
- 23: Leitung
- 24: Mühle
- 25: Rolle

## Patentansprüche

1. Verfahren zur Herstellung eines mit einem Schaumstoff, insbesondere Polyurethan-Schaumstoff, ausgeschäumten Hohlkammerprofils (2), bei dem auf eine Trägermaterialeinlage (5) ein flüssiges Reaktionsgemisch (3) zur Bildung des Schaumstoffes aufgetragen wird und die Trägermaterialeinlage (5) danach in das Hohlkammerprofil (2) eingezogen wird, **dadurch gekennzeichnet, dass** dem Reaktionsgemisch (3) vor dem Auftragen auf die Trägermaterialeinlage (5) zumindest ein Hilfsstoff zugesetzt wird, der ein Zerfließen des aufgetragenen Reaktionsgemisches (3) quer zu einer Bewegungsrichtung (Pfeil (20)) der Trägermaterialeinlage (5) zumindest nach dessen Auftrag auf die Trägermaterialeinlage (5) und vor dem Einziehen derselben in das Hohlkammerprofil (2) verhindert bzw. verzögert.

2. Verfahren nach Anspruch 1, **dadurch gekennzeichnet, dass** als Hilfsstoff zumindest ein Verdickungsmittel zugesetzt wird.

3. Verfahren nach Anspruch 1 oder 2, **dadurch gekennzeichnet, dass** mit dem Hilfsstoff eine Anfangsviskosität des Reaktionsgemisches (3) von größer 850 mPas eingestellt wird.

4. Verfahren nach Anspruch 3, **dadurch gekennzeichnet, dass** eine Anfangsviskosität des Reaktionsgemisches (3) ausgewählt aus einem Bereich mit einer unteren Grenze von 900 mPas, insbesondere 950 mPas, vorzugsweise 1000 mPas, und einer oberen Grenze von 1200 mPas, insbesondere 1150 mPas, vorzugsweise 1100 mPas, eingestellt wird.

5. Verfahren nach einem der vorhergehenden Ansprüche 2 bis 4, **dadurch gekennzeichnet, dass** das zugesetzte Verdickungsmittel ausgewählt ist aus einer Gruppe umfassend Talkum, Kieselsäure, Rizinusderivate, synthetische Verdickungsmittel auf Acrylatbasis, natürliche bzw. synthetische Polymere, wie z.B. wasserquellbare oder wasserlösliche synthetische Polymere, bestehend aus hochmolekularen Polymerisaten von Acrylamid bzw. Methacrylamid oder Copolymerisate aus Acrylsäure und Acrylamid mit Molmassen von größer 1 Million, hochmolekulare Polyethylenglykole, Polymerisate aus Ethylenglykol und Propylenglykol, hochmolekulare Polysaccharide, wie Stärke, Guarkemmehl, Johannisbrotkemmehl, Derivate von Naturstoffen wie Carboxymethylcellulose, Hydroxyethylcellulose, Hydroxypropylcellulose oder Cellulose-Mischether.

6. Verfahren nach einem der vorhergehenden Ansprüche, **dadurch gekennzeichnet, dass** mit dem Hilfsstoff eine Thixotropierung des Reaktionsgemisches (3) durchgeführt wird.

7. Verfahren nach einem der vorhergehenden Ansprüche, **dadurch gekennzeichnet, dass** mit dem Hilfsstoff eine oberflächliche Verhautung des aufgetragenen Reaktionsgemisches (3) nach dessen Auftragen erfolgt.

8. Verfahren nach einem der vorhergehenden Ansprüche, **dadurch gekennzeichnet, dass** das Reaktionsgemisch (3) gelartig konditioniert ist.

9. Verfahren nach einem der vorhergehenden Ansprüche, **dadurch gekennzeichnet, dass** dem Reaktionsgemisch (3) ein Schaumstoffpulver, insbesondere bestehend aus dem Schaumstoff der Ausschäumung, zugesetzt wird.

10. Verfahren nach Anspruch 9, **dadurch gekennzeichnet, dass** Partikel des Schaumstoffpulvers eine mittlere Korngröße aufweisen ausgewählt aus einem Bereich mit einer unteren Grenze von 30 µm, insbesondere 50 µm, vorzugsweise 70 µm und einer oberen Grenze von 170 µm, insbesondere 150 µm, vorzugsweise 100 µm.

11. Hohlkammerprofil (2) mit einer Ausschäumung zumindest einzelner Hohlkammern hergestellt aus einem Reaktionsgemisch (3), insbesondere aus einem Polyurethanschaum, sowie mit einer in der bzw. den Hohlkammer(n) angeordneten Trägermaterialeinlage (5), **dadurch gekennzeichnet, dass** dem Reaktionsgemisch (3) zumindest ein Hilfsstoff zugesetzt ist, der ein Zerfließen des aufgetragenen Reaktionsgemisches (3) quer zu einer Bewegungsrichtung (Pfeil (20)) der Trägermaterialeinlage (5) nach dessen Auftrag auf die Trägermaterialeinlage (5) und vor dem Einziehen derselben in das Hohlkammerprofil (2) verhindert bzw. verzögert.

12. Hohlkammerprofil (2) nach Anspruch 11, **dadurch gekennzeichnet, dass** der Hilfsstoff zumindest ein Verdickungsmittel ist.

13. Hohlkammerprofil (2) nach Anspruch 12, **dadurch gekennzeichnet, dass** das zugesetzte Verdickungsmittel ausgewählt ist aus einer Gruppe umfassend Talkum, Kieselsäure, Rizinusderivate, synthetische Verdickungsmittel auf Acrylatbasis, natürliche bzw. synthetische Polymere, wie z.B. wasserquellbare oder wasserlösliche synthetische Polymere, bestehend aus hochmolekularen Polymerisaten von Acrylamid bzw. Methacrylamid oder Copolymerisate aus Acrylsäure und Acrylamid mit Molmassen von größer 1 Million, hochmolekulare Polyethylenglykole, Polymerisate aus Ethylenglykol und Propylenglykol, hochmolekulare Polysaccharide, wie Stärke, Guarkernmehl, Johannisbrotkernmehl, Derivate von Naturstoffen wie Carboxymethylcellulose, Hydroxyethylcellulose, Hydroxypropylcellulose oder Cellulose-Mischether.

14. Hohlkammerprofil (2) nach einem der Ansprüche 11 bis 13, **dadurch gekennzeichnet, dass** der Hilfsstoff ein Thixotropierungsmittel ist.

15. Hohlkammerprofil (2) nach Anspruch 14, **dadurch gekennzeichnet, dass** das Thixotropierungsmittel ausgewählt ist aus einer Gruppe umfassend anorganische Leichtfüllstoffe und Amine.

16. Hohlkammerprofil (2) nach einem der Ansprüche 11 bis 20, **dadurch gekennzeichnet, dass** als Hilfsstoff ein Schaumstoffpulver, insbesondere bestehend aus dem Schaumstoff der Ausschäumung, zugesetzt ist.

17. Hohlkammerprofil (2) nach Anspruch 16, **dadurch gekennzeichnet, dass** das Schaumstoffpulver eine mittlere Korngröße aufweist, ausgewählt aus einem Bereich mit einer unteren Grenze von 30 µm, insbesondere 50 µm, vorzugsweise 70 µm und einer oberen Grenze von 170 µm, insbesondere 150 µm, vorzugsweise 100 µm.

18. Hohlkammerprofil (2) nach einem der Ansprüche 11 bis 17, **dadurch gekennzeichnet, dass** die Trägermaterialeinlage zumindest annähernd ebenflächig ausgebildet ist.
